# EUROPEAN PATENT APPLICATION

(11) **EP 4 236 278 A2**
(43) Date of publication of application: **30.08.2023**
(21) Application number: 23382168.5
(22) Date of filing: 23.02.2023
(51) Int. Cl.: H04M 1/02, H04M 11/02, H04N 7/18, H04L 12/28

(54) **COMMUNICATION INTERFACE SYSTEM AND ELECTRONIC DOOR-ENTRY INSTALLATION CONTROL METHOD**

(30) Priority: 28.02.2022 ES 202230158
(71) Applicant: Fermax Technologies, S.L.U., 46017 Valencia (ES)
(72) Inventor: Ferrer Zaera, Carlos, 46017 Valencia (ES); Alapont Navarro, Francisco, 46017 Valencia (ES); Pinazo Sanchez, Jose Miguel, 46017 Valencia (ES); Palacio Chavagnat, Jeremy, 46017 Valencia (ES)
(74) Representative: Isern Patentes y Marcas S.L.

(57) **Abstract**

The present invention relates to a communication interface system configured to establish communication between an electronic door-entry installation and at least one user equipment, an electronic door-entry installation control method, and more specifically to an interface system configured to detect and transmit call signals to a user equipment, to establish two-way communication between the user equipment and the street panel of the electronic door-entry installation and to transmit a door opening signal to the electronic door-entry installation. The invention also provides a method for opening a door with an electronic door-entry installation and a method for testing a communication interface system.

## Description

### Technical field of the invention

The present invention relates to a communication interface system configured to establish communication between an electronic door-entry installation and at least one user equipment, an electronic door-entry installation control method, and more specifically to an interface system configured to detect and transmit call signals to a user equipment, to establish two-way communication between the user equipment and the street panel of the electronic door-entry installation and to transmit a door opening signal to the electronic door-entry installation. The invention also provides a method for opening a door with an electronic door-entry installation and a method for testing a communication interface system.

### Background of the invention

Most electronic and video door-entry installations are located in residential buildings and have equipment that is rarely replaced, which is why they quickly tend to become obsolete and cannot offer the latest features and functionalities that the evolution of technology offers and which residents would like to have. Access to these new features generally requires completely replacing the electronic door-entry installation; therefore, one of the reasons for delaying or dispensing with the renewal of the electronic door-entry system is the cost of investment and the lack of consensus in homeowners' associations.

Currently, some of the features that the most modern electronic door-entry installations usually provide are the following:
- Call forwarding to the resident's mobile to be able to respond to a visit, even remotely, without being at home. This functionality is increasingly in demand due to the growth of electronic commerce and the need to respond to couriers so that they leave packages in an area of the building or with a neighbour.
- Viewing of the image of the visit, currently only available in video door-entry installations.
- Opening of the building door by the resident through an application (app) installed on a smartphone, without using the key.

There are currently devices on the market that make it possible to update the features of older electronic and video door-entry installations, such as the Fermax WiBox device, with call forwarding and door opening features, although in most known devices the available functionalities are limited only to opening doors. One of the main problems of these devices is that they must be installed inside each of the homes that wish to opt for these new functionalities, with a considerable investment of time and resources, and since it depends on the existing infrastructure in the building, it is impossible to implement certain functionalities, such as the transmission of a video signal to show the image of the visit.

Other devices and methods are also known to extend the features of installations beyond the simple opening of doors, although they require that the street panel of the electronic door-entry system to be completely replaced with another more modern panel that can provide new features, such as 2N 4G panels, which in any case must be authorised by the building's homeowners' association.

In other words, the currently known methods and devices for updating electronic and video door-entry installations with advanced functions either require the partial or total replacement of the installation or require the installation of individual devices in each home that only offer some limited functionalities.

Therefore, it is clear that there is a demand for updating systems for electronic and video door-entry installations with advanced functions that allow the aforementioned problems to be overcome.

### Description of the invention

The present invention proposes a solution to the foregoing problems by means of a communication interface system, an electronic door-entry installation control method, a method for opening a door with an electronic door-entry installation and a method for testing a communication interface system as described below.

In a first inventive aspect, the invention provides a *communication interface system configured to establish communication between an electronic door-entry installation and at least one user equipment; wherein the electronic door-entry installation comprises:*
*at least one street panel,*
*a plurality of home terminals,*
*control means for opening at least one door,*
*a plurality of call conductors configured to transmit first call signals from the street panel to the home terminals,*
*a communication conductor configured to establish two-way audio communication between the street panel and the home terminals, and*
*an opening conductor configured to transmit a first opening signal from the home terminals to the control means for opening a door;*
*wherein the system is characterised in that it comprises:*
*an interface device with wireless communication means and a processor, wherein the interface device is in connection with the communication conductor and with the*
*opening conductor, and*
*at least one detection device with a serialiser in connection with the call conductors and with the interface device,*
*wherein the detection device is configured to detect and transmit first call signals to the interface device, and wherein the interface device is configured to identify a user equipment corresponding to a first call signal, to transmit a second call signal to the corresponding user equipment, to establish two-way audio communication between the street panel and the corresponding user equipment, and to transmit a second opening signal from the corresponding user equipment to the opening conductor*

The present invention offers a solution to update the electronic or video door-entry installations of a building, so that new features or functionalities are provided to the neighbours or residents of the building without the need to replace the existing electronic or video door-entry installations, and they generally comprise a street panel and a plurality of home terminals, one for each home in the building.

Throughout this document it will be understood that an electronic door-entry installation is a set of devices generally intended for the communication of one or more homes in a building with access to said building. Preferably, the electronic door-entry installation comprises a street panel arranged at the access to the building and which is configured so that a visitor can send a differentiated call signal to a home, and to establish two-way audio communication between the panel and each home terminal; moreover, the panel is also preferably configured to act on means for opening access to the home in response to an opening signal from a home terminal.

For their part, the home terminals are preferably configured to receive a call signal from the street panel, establish two-way audio communication and send an opening signal. Also preferably, the communication between the street panel and the home terminals are connected to each other by means of conductors, which in a preferred embodiment are wires, cables or cable bundles, but which can be any other means of transmitting signals between the different elements of the electronic door-entry installation. Moreover, it will be understood that a video door-entry installation is a particular embodiment of an electronic door-entry installation that comprises at least image capture means, such as a camera, and home terminals equipped with elements that can reproduce the captured image.

The present invention offers the possibility of expanding the functionalities of an electronic or video door-entry installation by installing a communication interface system, or interface system, which makes it possible to establish communication between the electronic door-entry installation and a user equipment and to transmit call and door opening signals. In a preferred embodiment, the interface system allows call signals, audio signals and opening signals to be transmitted, received and/or processed between the installation and a user equipment by means of wireless communication means.

It must be understood that a device or user equipment is a device capable of signal communication, in particular a device capable of establishing audio communication and other signals with the interface device, and which in a preferred embodiment is configured to establish wireless communication by means of a connection to a communications network, such as a landline telephone network, a mobile telephone network, or a data network. In a preferred embodiment, the user equipment is a smartphone, and in other examples it is a landline telephone with connection to the switched telephone network, and from this network to the mobile telephone network to establish a connection with the wireless communication means of the interface device. In a preferred embodiment, when the user equipment is a smartphone, installed therein is a mobile application that implements at least the audio communication, video communication and door opening functionalities.

Preferably, the interface device is in connection with the communication conductors between the street panel and the home terminals; in particular, the connection is direct by means of a wired connection for the communication and call conductors, and through one or more detection devices for the call conductors. Each detection device is in wired connection with a set of call conductors, and is configured to transform a plurality of signals from the call conductors (which may be either a signal representing a call, or a signal representing the lack of a call) in a sequence of serial signals; this signal transformation is achieved by means of a serialiser. The output of the serialiser may be connected to another detection device, to which it transmits the serialised signals, or it may be connected to the interface device; the additional detection device, for its part, also receives a plurality of call signals from another set of call conductors, and after processing it adds them to the serialised signal. Depending on the number of call conductors and the capacity of the serialiser, it will be necessary to install a certain number of detection devices connected one after another, wherein the last detection device is connected to the interface device.

The interface device comprises, in turn, a processor capable of interpreting the signals from the call conductors; in other words, the processor is configured to identify to which home a specific call signal in the signal stream corresponds; in a preferred embodiment it is achieved by means of a log of user equipment stored in storage means of the processor. Moreover, the processor is capable of processing the audio and/or call signals received from the electronic door-entry installation and transmitting them to the user equipment by means of wireless communication means. The wireless communication means are, in one embodiment, a 2G, 3G, 4G, 5G modem or other type of device configured to establish voice and data communication between the interface device and a communication network, such as a mobile telephone network, and through this network it is possible to connect to a landline telephone network and/or the Internet. Similarly, the wireless communication means are capable of receiving audio and/or door opening signals from the user equipment; in a preferred embodiment, the communication between the user equipment and the interface device is carried out through the mobile telephone network, and from this network to the landline telephone network; in this case, the two-way audio communication occurs as a conventional voice call, and the user equipment can send a door opening signal by means of tone dialling. In another embodiment, the two-way audio communication occurs as an IP voice call, over the Internet.

In a particular embodiment, *the interface device is in communication with a data communication network, or with a telephone network, or with both, through the wireless communication means.*

Advantageously, the interface system can be associated with user equipment with an Internet connection, such as smartphones or tablets, as well as with conventional landline telephone terminals. In the latter, the call signal is transmitted as a telephone call tone, the audio communication occurs as a conventional voice call, and a door opening signal is sent by means of tone dialling. In a preferred embodiment, the communication with the user equipment is carried out through a server with an Internet connection.

In a particular embodiment, *the interface device comprises an analogue-to-digital converter, or a digital-to-analogue converter, or both, configured to transform signals, for their transmission, for their reception and*/*or for their processing.*

Most electronic door-entry installations use analogue signals, at least for audio communication; on the other hand, both the processors and the current wireless communication means normally operate with digital signals. The analogue-to-digital converter and/or the digital-to-analogue converter make it possible to transform the call, audio and/or opening signals for their transmission from or to the electronic door-entry installation into digital or analogue signals, as appropriate, which advantageously allows these signals to be processed and transmitted between digital and analogue systems.

In a particular embodiment, *the serialiseris configured as a shift register circuit.*

Advantageously, the shift register makes it possible to transform a plurality of signals received from a set of call conductors, connected in parallel, into a stream of sequential signals corresponding to each one of the homes, which makes it possible to identify to which home the call signal is directed.

In a particular embodiment, *the electronic door-entry installation further comprises image capture means and a video conductor configured to establish video communication between the street panel and the home terminals, and wherein the interface device is further configured to establish video communication between the street panel and the user equipment.*

Advantageously, the image capture means of the electronic door-entry installation allow a video signal to be transmitted from the street panel to the user equipment for the visual identification of the visitor; in a preferred embodiment, the image capture means is a video door-entry camera, and the installation further comprises the necessary conductors, interfaces and means to transmit the video signal to the home terminals.

In a particular embodiment, the system *further comprises electromagnetic shielding means between the interface device and the electronic door-entry installation.*

In conventional electronic door-entry installations, the conductors do not have special protection against electromagnetic interference, meaning that they are especially sensitive to signals of this type. Advantageously, the shielding means prevent the emission of radiofrequency signals from the wireless communication means from causing interference in the conductors of the electronic door-entry installation.

In a particular embodiment, the system *further comprises an additional camera in communication with the interface device.*

The additional camera of the interface system corresponds to a camera added to an electronic door-entry installation without image capture means, so that the additional camera advantageously offers an image signal to identify a visitor on the user equipment. This additional camera, in principle, does not offer an image signal to the home terminals, and should not be confused with the image capture means of a video door-entry installation, which function is similar, but which correspond to an already existing device in the electronic door-entry installation.

In a particular embodiment, *the interface device comprises a non-volatile memory configured to store a user log, which lists each user equipment registered to a home terminal.*

The non-volatile memory is, in a preferred embodiment, digital storage media operatively connected to the processor; logs are stored in the memory and list or establish a correspondence between the call signals and the users, residents or the user equipment. Given the nature of the signals, in one embodiment, the home terminals are associated with a number, which, for example, may correspond to the order that their signal occupies in the stream of serialised call signals, while the user equipment are associated with a user equipment identifier or a telephone number. Advantageously, the processor of the interface device consults the memory in which the user log is located to determine to which user equipment the call signal must be redirected in order to receive it.

In a particular embodiment, *each detection device comprises connectors configured to establish a connection with another detection device, or with the interface device, or with both.*

Advantageously, the connections between detection devices allow the call signal stream to be transmitted to another detection device and allow its call signals to be concatenated so that as many detection devices as necessary can be connected to connect all the call conductors.

In a particular embodiment, the system *comprises a plurality of cascaded detection devices.*

Advantageously, the cascading configuration allows a connection to be established between the detection devices, so that the call signals can be sequentially linked to those of the detection device.

In a second inventive aspect, the invention provides an *electronic door-entry installation control method by means of an interface system according to the first inventive aspect, wherein the method comprises, via the interface device, the steps of:*
*receiving, from at least one detection device, a first call signal,*
*identifying the user equipment corresponding to the first call signal by means of a user log,*
*transmitting a second call signal to the corresponding user equipment.*

The control method allows the operation of the communication interface system to be controlled and a call signal to be transmitted to the corresponding user equipment. The method is implemented by the interface device, and in a preferred embodiment it is initiated in response to a call signal from a call conductor, or first call signal, through at least one detection device, and it represents a call action by a visitor. The interface device receives the signal from the detection device, and depending on the position within the sequence, it determines to which home terminal the call signal is directed. The interface device identifies to which user equipment the call terminal corresponds, and transmits a second call signal to that user equipment.

In one embodiment, the interface device consults a log stored in a digital memory and determines which user equipment is associated with the home terminal to which the first call signal is directed, and causes the wireless communication means to establish communication with the corresponding user equipment. In one example, the log includes a telephone number, and the wireless communication means place a telephone call to the user equipment, which would be the second call signal.

In another embodiment, the interface device determines to which home terminal the first call signal is directed, and causes the wireless communication means to establish data communication with a server; then the server searches a database for the information corresponding to the specific home terminal, and obtains an identifier of the corresponding user equipment, or some identifiers of a set of user equipment associated with that home terminal. The server then establishes communication with the corresponding user equipment and redirects the second call signal.

In one embodiment, the method *further comprises, via the interface device, the steps of:*
*receiving an audio signal from the communication conductor,*
*transmitting the audio signal to the corresponding user equipment.*

After transmitting a second call signal to the user equipment, the interface device optionally transmits an audio signal to the user equipment, which advantageously allows the user to identify the visitor. In one embodiment, the audio signal received by the interface device through the call conductors is an analogue audio signal, which is transformed into a digital signal by means of an A/D converter, and is transmitted to the wireless communication means.

In a particular embodiment, the method *further comprises, via the interface device, the steps of:*
*receiving an audio signal from the corresponding user equipment,*
*transmitting the audio signal to the communication conductor.*

Similarly, the user can choose to communicate verbally with the visitor, whereby an audio signal is transmitted in the opposite direction, from the user equipment to the communication conductor and the street panel. In the embodiment in which the audio signal used by the electronic door-entry installation is analogue and the signal received by the interface device is digital, it is necessary for a D/A converter to transform the digital signal into an analogue signal for its transmission to the communication conductor.

In a particular embodiment, the method *further comprises, via the interface device, the steps of:*
*receiving a second opening signal from the corresponding user equipment,*
*transmitting a first opening signal to the opening conductor.*

Remotely unlocking the door is included among the options available to the user. To do this, the user equipment sends a second opening signal, which is received by the electronic communication means of the interface device. In one embodiment, the second opening signal is a signal encoded as a digital signal that the interface device can interpret and process or adapt to send a first opening signal. In another embodiment, when the user equipment uses a conventional telephone network, the second opening signal is encoded as a DTMF tone (dual-tone multi-frequency), which the interface device receives and transforms into a first opening signal acceptable to the electronic door-entry installation.

In a particular embodiment, *the audio signal of the communication conductor is an analogue audio signal, and wherein the method further comprises, via the interface device, the step of transforming the analogue audio signal into a digital audio signal, or the step of transforming a digital audio signal into an analogue audio signal, or both.*

Advantageously, the transformation of analogue signals into digital signals and vice versa makes it possible to adapt audio, opening and call signals for their interpretation, processing and transmission by the electronic door-entry installation or the interface system, as appropriate.

In a particular embodiment, the method *further comprises, via the interface device, the steps of:*
*transmitting to the corresponding user equipment a second call signal, or a digital audio signal, or both, through a server by means of the data communication network,*
*receiving from the corresponding user equipment a second opening signal, or a digital audio signal, or both, through the server by means of the data communication network.*

According to this embodiment, the interface device is in communication with a data network, for example the Internet, and transmits its signals through a server with data connection. In this way, the communication between the interface system and the user equipment is centralised in a server that can be accessed, selectively, by certain authorised users or administrators. Advantageously, this allows greater control over the different functionalities offered by the interface system, in particular being able to authorise or deny the use of a functionality to a specific user, or increasing system security.

In a particular embodiment, *the method further comprises, via the interface device, the steps of:*
*transmitting to the corresponding user equipment through the telephone network a second call signal, or an audio signal, or both,*
*receiving from the telephone network a second opening signal, or an audio signal, or both.*

Similarly, the interface device can transmit a second call signal, receive a second opening signal, and/or establish audio communication with conventional telephone signals for a user equipment connected to the mobile or switched telephone network.

In a particular embodiment, the method *further comprises, via the interface device, the steps of:*
*receiving a video signal from the video conductor,*
*transmitting the video signal to the corresponding user equipment.*

In the embodiments in which the electronic door-entry installation comprises image capture means, i.e., a video door-entry installation, the method also considers sending the video signal in a manner analogous to the transmission of the other signals.

In a particular embodiment, *the method further comprises, via the interface device, the steps of:*
*receiving a video signal from the additional camera,*
*transmitting the video signal to the corresponding user equipment.*

For its part, the electronic door-entry installation may not have image capture means; the interface system allows these installations to have the capacity to transmit a video signal by means of an additional camera that takes images of the visitor and transmits them to the interface device. Like the other signals, the interface device retransmits them to the user equipment by any of the methods described.

In a third inventive aspect, the invention provides a *method for opening a door with an electronic door-entry installation by means of an interface system according to the first inventive aspect, wherein the method comprises, via the interface device, the steps of:*
*receiving, from a registered user equipment, a second opening signal,*
*transmitting a first opening signal to the opening conductor.*

Advantageously, the door opening method, or direct opening, makes it possible to remotely unlock access to a building, sending a second opening signal from the user equipment. Moreover, this method also allows authorised persons to access the building without needing to cause a disturbance to the residents. This can apply, for example, to couriers, delivery companies and logistics companies, who can deliver orders without the need for a resident to open the door for them to deliver the order.

In a fourth inventive aspect, the invention provides a *method for testing a communication interface system according to the first inventive aspect, wherein the method comprises, via the interface device, the steps of:*
*receiving, from at least one detection device, a first call signal,*
*identifying the call conductor corresponding to the first call signal,*
*generating a voice identifier of the call conductor,*
*transmitting the voice identifier of the call conductor to the communication conductor.*

The testing method, or connection testing method, makes it possible to determine in which order the call conductors were connected to the detection devices and to verify the correct installation of the connections between the conductors of the electronic door-entry installation and the interface system. To do this, once the connections have been made, when the test mode is selected, the installer can successively press the buttons on the street panel, which results in the corresponding call signals received by the interface device; the interface device identifies the call signals and generates a voice identifier related to the signal, for example, the sequence number of the signal, which allows each call conductor to be associated with a home terminal and a resident or user equipment.

These and other features and advantages of the invention will be apparent from the description of the preferred, but not exclusive, embodiments, which are illustrated by way of non-limiting example in the accompanying drawings.

### Brief description of the drawings

- Figure 1: shows a diagram of the communication interface system, of an electronic door-entry installation and of other associated elements.
- Figures 2a and 2b: show two possible embodiments of the communication interface system.
- Figure 3 shows: a diagram of a preferred embodiment of the communication interface system.

### Detailed description of an exemplary embodiment

Numerous specific details are set forth in the following detailed description in the form of examples to provide a thorough understanding of the relevant teachings. However, it will be apparent to those skilled in the art that the present teachings can be practiced without such details.

A preferred example of the present invention aims to provide new features to an electronic door-entry installation of the 4+N universal system, widely used in residential buildings. The 4+N-type electronic door-entry installation (100) comprises one or more street panels (103) and one or more terminals per home (104). From the street panel (103) the visitor selects the home he or she wishes to contact by pressing the call button associated with that home. The call generates an audible notification tone in the corresponding home terminal (104), which the resident can answer by picking up the handset and thus establish two-way audio communication with the visitor. Additionally, the resident can unlock the building door by pressing a button on the home terminal (104) to allow access to the building.

The distinctive feature of this type of electronic door-entry installation (100) is that it uses wiring with 4 wires or cables common to all the home terminals (104), including the communication conductors (101) and the opening conductor (105). The communication conductors (101) transmit the audio signals between the street panel (103) and the home terminals (104), and vice versa, while the opening conductor (105) transmits the door opening signal from the home terminals (104) to the street panel (103); moreover, the common wires comprise a negative reference conductor, which corresponds to the fourth wire. As for the signal that transmits the call, each home terminal (104) has a call conductor (102) that transmits the call signal from the street panel (103) to the selected home terminal (104); thus, for a case of N homes there will have N cables, meaning the installation will have 4+N wires. In some cases, the electronic door-entry installation (100) is a video door-entry installation and it has image capture means, such as a camera; in these cases, the electronic door-entry installation (100) comprises one or more corresponding conductors to transmit a video signal between the street panel (103), in which the camera is located, and the home terminals (104).

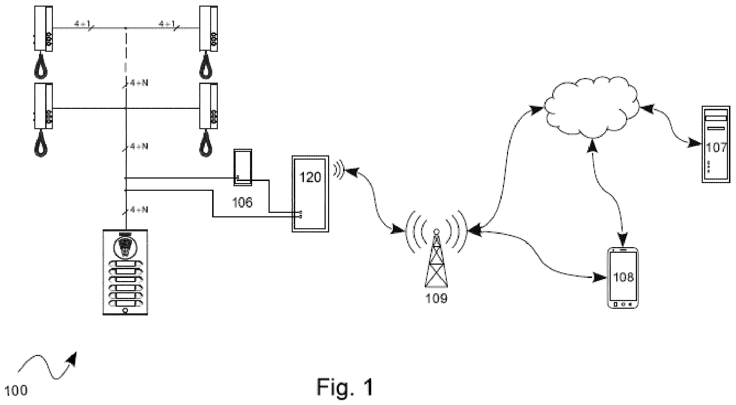

In a preferred exemplary embodiment, shown in Figure 1, the communication interface system that allows the functionalities of an electronic door-entry installation (100) to be expanded comprises an interface device (120), which is installed in the building, generally close to the street panel (103), in a wired connection with the pre-existing 4+N electronic door-entry installation (100), which allows audio information (optionally video information as well) and data to be exchanged between the street panel (103) and a user equipment (108) through the Internet. To do so, in this example, the interface device (120) includes wireless communication means (122) to establish an Internet connection and communicate with the user equipment (108) or with a server (107), such as a 4G or 5G wireless connectivity module; in other examples, the wireless communication means (122) comprise a wireless telephone connectivity module (GSM) for communicating with the telephone network and communicating with user telephones by ordinary telephone call (PSTN).

In the examples of electronic door-entry installations (100) without image capture means, the interface system can optionally include an additional camera (111) arranged next to or on the street panel (103) that takes the image of the visitor to offer an additional feature.

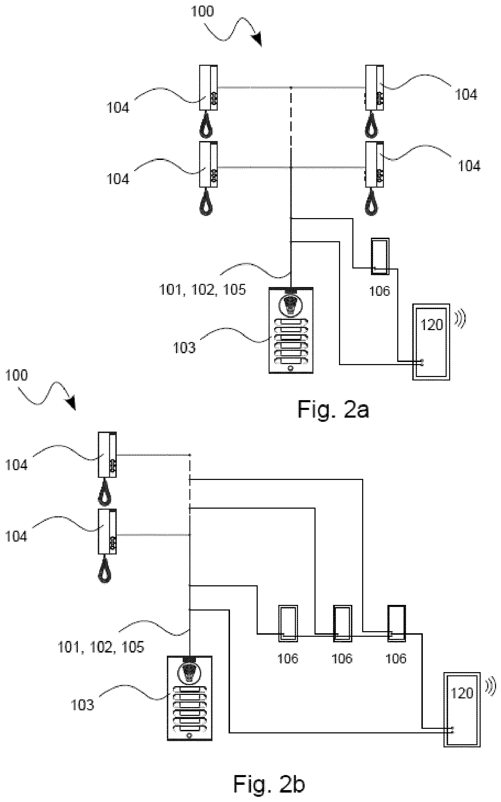

The interface device (120), shown in Figure 2a, is connected by means of a conventional wired connection to the conductors (101, 105) of the electronic door-entry installation (100) between the street panel (103) and the home terminals (104), so that it has access to the communication conductors (101) and the audio signals, and to the opening conductors (105) and the door opening signal. In order to avoid interference from the radio communication signals of the wireless communication means (122), the interface device (120) is installed at a certain distance from the street panel, or electromagnetic shielding is placed between the interface device (120) and the electronic door-entry installation (100).

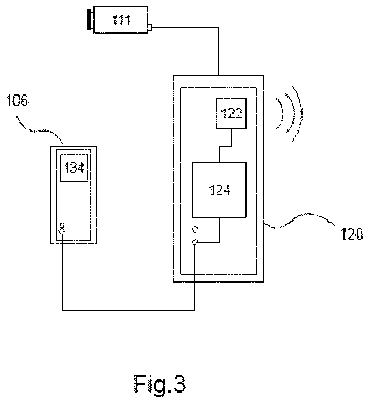

Moreover, in the described example, shown in Figures 1-3, the interface device (120) comprises circuits for adapting the audio signals to and from the street panel (103), such as signal amplifiers, an analogue-to-digital (A/D) converter to digitise the audio signal coming from the street panel (103) and send it to the user equipment (108), a digital-to-analogue (D/A) converter to convert the digital signal coming from the user equipment (108) into an analogue signal so that it can be reproduced on the street panel (103). The wireless communication means (122), in an exemplary embodiment, comprise a 2G/3G/4G/5G modem that allows connection to the Internet and to the mobile telephone network, and a connection to an antenna that can be installed wherever convenient to ensure signal reception. The interface device (120) also comprises a processor (124) that is responsible for controlling and managing the interface system; preferably, the processor (124) includes volatile and non-volatile memories for storing and running software programs, databases, pre-recorded audio messages, and other necessary data. Depending on whether the street panel (103) has image capture means, the interface device (120) optionally comprises a camera interface with an A/D converter to digitise the video signal coming from image capture means of the street panel (103) or of an additional camera (111), in order to send it to the user equipment (108).

The interface device (120) receives information from the call conductors (102) and the call signal through one or more detection devices (106). Each detection device is connected to a group of call conductors (102), typically eight conductors per device, but it can be a different number, and additional detection devices (106) are incorporated depending on the number of home terminals (104) of the installation, so that as many detection devices (106) as groups of call conductors (102) that are necessary are installed. When several detection devices (106) are needed, they are cascaded together and the first of the detection devices (106) is connected to the interface device (120).

The detection devices (106) can be installed inside the installation box of the street panel (103) to make installation easier or they can be installed in any place where the wiring runs, depending on the characteristics of the electronic door-entry installation (100). In examples of electronic door-entry installations (100) with more than one street panel (103), the detection devices (106) are installed in the area where the wiring of all the street panels (103) comes together, where an auxiliary element for switching the audio signals is usually installed.

In the example shown in Figure 2b, the detection devices (106) comprise connectors configured to transmit first call signals to previous detection devices (106) or to the interface device (120), and other connectors configured to receive first call signals or from subsequent detection devices (106); furthermore, each detection device (106) comprises a serialiser (134) which in a preferred example is configured as a shift register that serialises the status of the signals from the different call conductors (102) and concatenates the signals coming from the other connected subsequent detection devices (106).

The interface device (120) performs a sequential reading of the signals detected and adapted by the detection devices (106). Upon detection of a call signal in a particular call conductor (102) associated with a home, the interface device (120) determines whether the home receiving the call corresponds to a registered user.

In the described example, the interface device (120) transmits a second call signal to the user equipment (108) through a server (107); firstly, the interface device (120) sends a second call signal that is transmitted by means of wireless communication means, through the Internet, to the server (107). The server (107) identifies the user equipment (108) associated with the home terminal (104) and transmits the call to the corresponding user equipment (108). The user will be able to accept this call notification and establish two-way audio communication with the visitor who made the call from the street panel (103) and optionally video communication in the examples in which an additional camera (111) is available in or next to the street panel (103). If the user wishes to unlock the door, the user equipment (108) transmits a second opening signal to the server (107), and said server redirects it to the interface device (120), which in turn issues a first opening signal to the opening conductor (105).

If the service associated with the corresponding user equipment (108) is the telephone call, the wireless communication means (122) of the interface device (102) make a conventional telephone call to the corresponding user equipment (108) through the network telephone (109); the user can answer the call from the interface device (102) as a normal telephone call, with two-way audio communication with the street panel (103) and having the option of unlocking the door. To do this, the user equipment (108) sends a second opening signal that is sent by tone dialling (DTMF) to the interface device (120) which in turn will send a first opening signal to the opening conductor (105).

The server (107) in a preferred example comprises a database that associates the home of each building with a corresponding registered user equipment (108) and other relevant information to locate it in the communications network, such as a telephone number or a notification service token. The server (107) can also transmit the audio (and/or video) data stream and other signals to and from the interface device (120).

The interface system also allows direct door opening by means of a registered user equipment (108) without a previous call from a visitor; according to this method, the registered user equipment (108) sends a second opening signal to the interface device (120), which sends a first opening signal to the opening conductor (105), resulting in the unlocking of the door.

The direct opening method can be applied not only to user equipment (108) of residents in the home, but also to user equipment (108) for delivery people, parcel companies and logistics companies, to facilitate their work without causing a disturbance to residents. In a preferred example, the user equipment (108) of the courier transmits a first opening signal to the server (107) via an API (Application Programming Interface), configured in such a way that it only allows the door to be opened under certain conditions, such as a certain time slot, the existence of a resident's authorisation, etc. The server (107), once it has verified the access permissions of that user equipment (108), will send a first opening signal to the interface device (120).

Moreover, the communication interface system is configured to implement a test functionality, or method for testing the communication interface system, which makes it possible to determine in which order the call conductors (102) were connected to the detection devices (106), and thus check that the connections between the electronic door-entry installation (100) and the interface system are correctly made. The method is based on the sending of first call signals from the street panel (103), which the interface device (120) receives through the detection device(s) (106), the identification of the connector to which the call conductor (102) is connected, and the generation and sending of a voice identifier of the call conductor (102), which in a preferred example will be the vocalisation of the house number in which the home terminal (104) is installed; the voice identifier is sent through the loudspeaker of the street panel (103) so that the installer can determine whether the connection is correct. The method also makes it possible to make a test call to the corresponding user equipment (108) to check the correct installation and the availability of connection to the data and telephone network, as well as to check the audio quality in both directions and the video signal if there is any.

## Claims

1. A communication interface system configured to establish communication between an electronic door-entry installation (100) and at least one user equipment (108); wherein the electronic door-entry installation (100) comprises:
at least one street panel (103),
a plurality of home terminals (104),
control means for opening at least one door,
a plurality of call conductors (102) configured to transmit first call signals from the street panel (103) to the home terminals (104),
a communication conductor (101) configured to establish two-way audio communication between the street panel (103) and the home terminals (104), and
an opening conductor (105) configured to transmit a first opening signal from the
home terminals (104) to the control means for opening a door;
wherein the system is **characterised in that** it comprises:
an interface device (120) with wireless communication means (122) and a processor (124), wherein the interface device (120) is in connection with the communication conductor (101) and with the opening conductor (105), and
at least one detection device (106) with a serialiser (134) in connection with the call
conductors (102) and with the interface device (120),
wherein the detection device (106) is configured to detect and transmit first call signals to the interface device (120), and wherein the interface device (120) is configured to identify a user equipment (108) corresponding to a first call signal, to transmit a second call signal to the corresponding user equipment (108), to establish two-way audio communication between the street panel (103) and the corresponding user equipment (108), and to transmit a second opening signal from the corresponding user equipment (108) to the opening conductor (105).

2. The system according to the preceding claim, wherein the interface device (120) is in communication with a data communication network, or with a telephone network (109), or with both, through the wireless communication means (122).

3. The system according to any of the preceding claims, wherein the interface device (120) comprises an analogue-to-digital converter, or a digital-to-analogue converter, or both, configured to transform signals, for their transmission, for their reception and/or for their processing.

4. The system according to any of the preceding claims, wherein the serialiser (134) is configured as a shift register circuit.

5. The system according to any of the preceding claims, wherein the electronic door-entry installation (100) further comprises image capture means and a video conductor configured to establish video communication between the street panel (103) and the home terminals (104), and wherein the interface device (120) is further configured to establish video communication between the street panel (103) and the user equipment (108).

6. The system according to any of the preceding claims, further comprising electromagnetic shielding means between the interface device (120) and the electronic door-entry installation (100).

7. The system according to any of the preceding claims, further comprising an additional camera (111) in communication with the interface device (120).

8. The system according to any of the preceding claims, wherein the interface device (120) comprises a non-volatile memory configured to store a user log, which lists each user equipment (108) registered to a home terminal (104).

9. The system according to any of the preceding claims, wherein each detection device (106) comprises connectors configured to establish a connection with another detection device (106), or with the interface device (120), or with both.

10. The system according to any of the preceding claims, comprising a plurality of cascaded detection devices (106).

11. An electronic door-entry installation (100) control method by means of an interface system according to any of claims 1-10, wherein the method comprises, via the interface device (120), the steps of:
receiving, from at least one detection device (106), a first call signal,
identifying the user equipment (108) corresponding to the first call signal by means of a user log,
transmitting a second call signal to the corresponding user equipment (108).

12. The method according to the preceding claim, further comprising, via the interface device (120), the steps of:
receiving an audio signal from the communication conductor (101),
transmitting the audio signal to the corresponding user equipment (108).

13. The method according to any of claims 11-12, further comprising, via the interface device (120), the steps of:
receiving an audio signal from the corresponding user equipment (108),
transmitting the audio signal to the communication conductor (101).

14. The method according to any of claims 11-13, further comprising, via the interface device (120), the steps of:
receiving a second opening signal from the corresponding user equipment (108),
transmitting a first opening signal to the opening conductor (105).

15. The method according to any of claims 12-14, wherein the audio signal of the communication conductor (101) is an analogue audio signal, and wherein the method further comprises, via the interface device (120), the step of transforming the analogue audio signal into a digital audio signal, or the step of transforming a digital audio signal into an analogue audio signal, or both.

16. The method according to any of claims 11-15, wherein the method further comprises, via the interface device (120), the steps of:
transmitting to the corresponding user equipment (108) a second call signal, or a digital audio signal, or both, through a server (107) by means of the data communication network,
receiving from the corresponding user equipment (108) a second opening signal, or
a digital audio signal, or both, through the server (107) by means of the data communication network.

17. The method according to any of claims 11-15, further comprising, via the interface device (120), the steps of:
transmitting to the corresponding user equipment (108) through the telephone network (109) a second call signal, or an audio signal, or both,
receiving from the telephone network (109) a second opening signal, or an audio signal, or both.

18. The method according to any of claims 11-16, further comprising, via the interface device (120), the steps of:
receiving a video signal from the video conductor,
transmitting the video signal to the corresponding user equipment (108).

19. The method according to any of claims 11-16, further comprising, via the interface device (120), the steps of:
receiving a video signal from the additional camera (111),
transmitting the video signal to the corresponding user equipment (108).

20. A method for opening a door with an electronic door-entry installation (100) by means of an interface system according to any of claims 1-10, wherein the method comprises, via the interface device (120), the steps of:
receiving, from a registered user equipment (108), a second opening signal,
transmitting a first opening signal to the opening conductor (105).

21. A method for testing a communication interface system according to any of claims 1-10, wherein the method comprises, via the interface device (120), the steps of:
receiving, from at least one detection device (106), a first call signal,
identifying the call conductor (102) corresponding to the first call signal,
generating a voice identifier of the call conductor (102),
transmitting the voice identifier of the call conductor (102) to the communication conductor (101).
